# EUROPEAN PATENT APPLICATION

(11) **EP 3 846 324 A1**
(43) Date of publication of application: **07.07.2021**
(21) Application number: 19856089.8
(22) Date of filing: 30.08.2019
(51) Int. Cl.: H02K 15/06, H02K 3/04, H02K 15/04, H02K 15/085

(54) **METHOD FOR MANUFACTURING STATOR**

(30) Priority: 31.08.2018 JP 2018163245
(71) Applicant: Nidec Corporation, Minami-ku, Kyoto-shi, Kyoto 601-8205 (JP)
(72) Inventor: TANGE,Hiroshi, Kyoto-shi, Kyoto 601-8205 (JP)
(74) Representative: Zimmermann, Tankred Klaus
(86) International application number: PCT/JP2019/034152
(87) International publication number: WO 2020/045637

(57) **Abstract**

Provided is a stator manufacturing method that can improve the space factor of a stator. A stator manufacturing method includes bending steps S141, S142, S143 of bending the upper side, in the insertion direction, of an annular coil bundle P which includes at least multiple turns of a coil 10, and an insertion step S160 of inserting a bent coil bundle P' into a slot 22 of a stator core 20 in the axial direction from the upper side of the bent coil bundle P'.

## Description

### Technical Field

The present invention relates to a stator manufacturing method.

### Background Art

A stator manufacturing method in which a coil is inserted into a stator core is known. For example, Patent Literature 1 discloses a stator manufacturing method in which an annular coil bundle is inserted into a stator core from the axial direction.

### Citation List

### Patent Literature

Patent Literature 1: JP 2000-125521 A

### Summary of Invention

### Technical Problem

In a stator, in order to reduce a loss of a motor, it is necessary to narrow a gap between turns while winding a coil in a slot of a stator. In the slot of the stator, in order to improve the space factor, it is necessary to perform so-called aligned winding or the like, in which the turns of the coil are regularly arranged.

As a method of inserting the coil into an integrated stator core, there is a method of pushing an annular coil into the core from a slot opening. However, with this method, aligned winding cannot be performed and the space factor is low.

In view of the above problems, the present invention provides a stator manufacturing method that can improve the space factor of a stator.

### Solution to Problem

A stator manufacturing method of an exemplary embodiment of the present application includes a bending step of bending one side of an annular coil bundle which includes at least multiple turns of a coil, and an insertion step of inserting the annular coil bundle into a slot of a stator core in an axial direction from the one side.

### Advantageous Effects of Invention

According to an exemplary embodiment of the present application, the space factor of a stator can be improved.

### Brief Description of Drawings

Fig. 1 is a cross-sectional view of a stator in a section perpendicular to the axial direction.
Fig. 2A is a schematic view of an annular coil bundle.
Fig. 2B is a schematic view of a bent coil bundle.
Fig. 3 is a schematic view of a winding mold.
Fig. 4 is a flow chart of a stator manufacturing process.
Fig. 5 is a schematic view of a coil winding step.
Fig. 6 is a schematic view of an insulating paper wrapping step.
Fig. 7 is a schematic view of a compression step.
Fig. 8 is a schematic view of a bending step.
Fig. 9 is a schematic view of a compression step.
Fig. 10 is another schematic view of the compression step.
Fig. 11 is a schematic view of a bending step.
Fig. 12 is a schematic view of a compression step.
Fig. 13 is a schematic view of a bending step.
Fig. 14 is a schematic view of a compression step.
Fig. 15A is a schematic view of the progress of an insertion step.
Fig. 15B is a schematic view of the progress of the insertion step.
Fig. 15C is a schematic view of the progress of the insertion step.
Fig. 16 is a schematic view showing a restoration step.
Fig. 17A is a schematic view of an annular coil bundle of Embodiment 2.
Fig. 17B is a schematic view of a bent coil bundle of Embodiment 2.
Fig. 18 is a schematic view of a winding mold of Embodiment 2.
Fig. 19 is a flow chart of a stator manufacturing process of Embodiment 2.
Fig. 20 is a schematic view of a coil winding step of Embodiment 2.
Fig. 21 is a schematic view of a bending step of Embodiment 2.
Fig. 22 is a schematic view of an insertion step of Embodiment 2.

### Description of Embodiments

Hereinafter, embodiments of the present invention will be described with reference to the drawings. Note that the scope of the present invention is not limited to the following embodiments, but may have any changes within the technical spirit of the present invention.

In the following description, unless otherwise specified, in a section perpendicular to the axial direction of a stator, the ratio of the sectional area of copper (or aluminum) of a coil excluding the coating relative to the sectional area of a slot of a stator core excluding the insulating paper is referred to as "space factor".

In the following description, unless otherwise specified, a direction in which the central axis of a stator 100 extends is referred to as "axial direction". Additionally, one side along the axial direction is referred to as the upper side, and the other side is referred to as the lower side. Additionally, a direction orthogonal to the central axis of the stator 100 is referred to as "radial direction". One side along the radial direction is referred to as the inside, and the other side along the radial direction is referred to as the outside. Moreover, a direction along an arc centered on the central axis of the stator 100 is referred to as "circumferential direction". A reference determined in the axial direction, the radial direction, and the circumferential direction is referred to as "stator reference".

In the drawings used in the following description, a characteristic portion may be enlarged for the purpose of emphasizing the characteristic portion. Hence, the dimensions and ratios of components are not necessarily the same as the actual ones. Additionally, for the same purpose, less characteristic portions may be omitted from the drawings.

### <1. Stator>

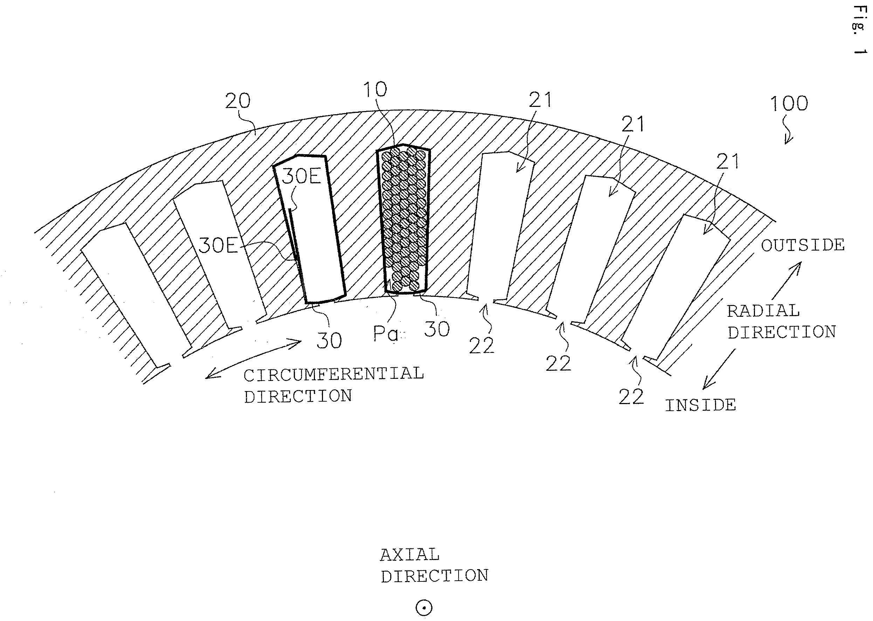

A stator 100 will be described with reference to Fig. 1. Note that Fig. 1 is a cross-sectional view of the stator 100 in a section perpendicular to the axial direction.

The stator 100 is a component of a motor and interacts with a rotor (not shown) to generate rotational torque. The stator 100 has a coil 10, a stator core 20, and an insulating paper 30. A distributed winding, in which the coil 10 is wound across several slots 21, is applied to the stator 100 of the present embodiment.

### <1-1. Stator core>

The stator core 20 is formed in a hollow columnar shape. The stator core 20 is formed by laminating thin silicon steel plates. Multiple slots 21 are formed radially in the stator core 20. A slot opening 22 that opens inward in the radial direction is formed in the slot 21. The stator core 20 of the present embodiment is an integrated stator core.

### <1-2. Coil>

The coil 10 is housed in the slot 21 by aligned winding. In the aligned winding, the coil 10 is regularly arranged in layers in a predetermined direction. While the coil 10 of the present embodiment is regularly arranged in layers in the circumferential direction in the slot 21, the coil 10 is not limited to this arrangement. Additionally, while the coil 10 of the present embodiment is a round wire, the coil 10 is not limited to this.

### <1-3. Insulating paper>

The insulating paper 30 is wrapped around the outer periphery of an aligned portion Pa formed of multiple coils 10 inserted into the slot 21. The aligned portion Pa will be described in detail later. An edge portion 30E on one end side and an edge portion 30E on the other end side of the insulating paper 30 overlap by a predetermined width. The overlapping portion of the edge portion 30E on one end side and the edge portion 30E on the other end side is provided on a side surface parallel to the radial direction of the slot 21. Note that, by wrapping the insulating paper 30 around the aligned portion Pa, the coil 10 of the aligned portion Pa does not protrude from the slot 21, so that a wedge for closing the slot opening 22 is unnecessary.

### <Embodiment 1>

### <2-1-1. Annular coil bundle>

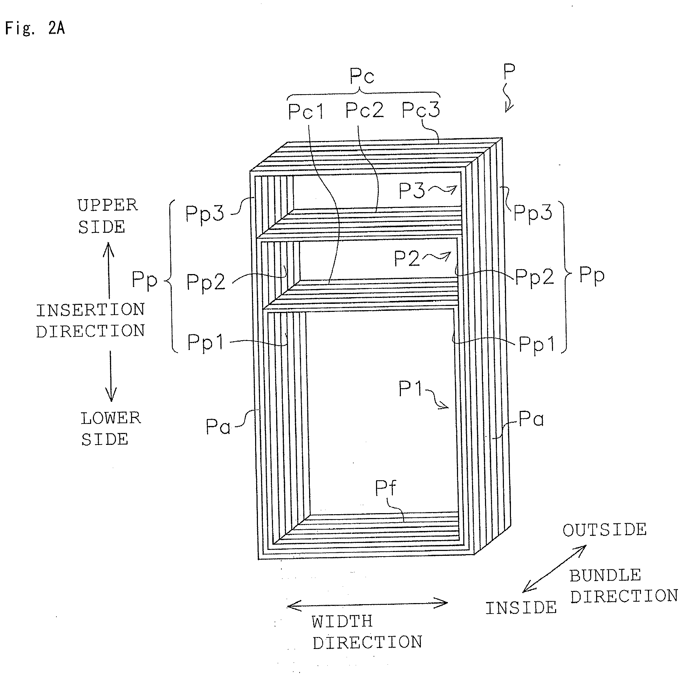

An annular coil bundle P will be described with reference to Fig. 2A. Note that Fig. 2A is a schematic view of the annular coil bundle P.

In the following description, unless otherwise specified, a direction in which annular coils of the annular coil bundle P are arranged as a bundle is referred to as "bundle direction". One side in the bundle direction is referred to as the inside, and the other side in the bundle direction is referred to as the outside. Additionally, in the annular coil bundle P, one of the winding directions of the coil 10 is referred to as "insertion direction". One side along the insertion direction is referred to as the upper side, and the other side along the insertion direction is referred to as the lower side. Moreover, in the annular coil bundle P, of the winding directions of the coil 10, a direction orthogonal to the insertion direction and the bundle direction is referred to as "width direction". A reference determined in the bundle direction, the width direction, and the height direction is referred to as "annular coil bundle reference".

The annular coil bundle P is formed by winding the coil 10 around a winding mold 110 described later in a coil winding step S110 to a compression step S130 described later. The annular coil bundle P is formed by winding one coil 10 with multiple turns. The annular coil bundle P is formed in a substantially rectangular shape when viewed from the bundle direction.

Here, an upper coil bundle of the annular coil bundle P parallel to the width direction is referred to as a ceiling portion Pc. Additionally, a lower coil bundle of the annular coil bundle P parallel to the width direction is referred to as a bottom portion Pf. Moreover, of the coil bundle of the annular coil bundle P parallel to the insertion direction, the upper side is referred to as a column portion Pp and the lower side is referred to as the aligned portion Pa. The aligned portion Pa is housed in the slot 21 of the stator core 20 in an insertion step S160 or later, which will be described later.

The sectional area of the section of the aligned portion Pa perpendicular to the insertion direction is substantially the same as the sectional area of the section of the slot 21 of the stator core 20 perpendicular to the axial direction. Note that "substantially the same" means the same except for design tolerances and the gap for insertion.

Since the aligned portion Pa is compressed by the compression step S130 described later, the cross-sectional shape of the section of the aligned portion Pa perpendicular to the insertion direction is smaller than the cross-sectional shape of the section of the coil bundle other than the aligned portion Pa perpendicular to the insertion direction.

The length of the aligned portion Pa in the width direction of the annular coil bundle reference is larger than the opening width of the slot opening 22 in the circumferential direction of the stator reference.

The annular coil bundle P includes, as multiple coil groups, a lower coil bundle P1 as a first coil group, a middle coil bundle P2 as a second coil group, and an upper coil bundle P3 as a third coil group, which have different lengths in the insertion direction.

Here, the column portion Pp of the lower coil bundle P1 is referred to as a column portion Pp1. The column portion Pp of the middle coil bundle P2 is referred to as a column portion Pp2. The column portion Pp of the upper coil bundle P3 is referred to as a column portion Pp3. The column portion Pp3 is formed outside the column portion Pp2 in the width direction. The column portion Pp2 is formed outside the column portion Pp1 in the width direction.

Here, the ceiling portion Pc of the lower coil bundle P1 is referred to as a ceiling portion Pc1. The ceiling portion Pc of the middle coil bundle P2 is referred to as a ceiling portion Pc2. The ceiling portion Pc of the upper coil bundle P3 is referred to as a ceiling portion Pc3. The ceiling portion Pc3 is formed above the ceiling portion Pc2 in the insertion direction. The ceiling portion Pc2 is formed above the ceiling portion Pc1 in the insertion direction.

The bottom portion Pf straddles the slots 21 of the stator core 20 in the insertion step S160 and later, which will be described later. The bottom portion Pf is formed between the aligned portions Pa.

### <2-1-2. Bent coil bundle>

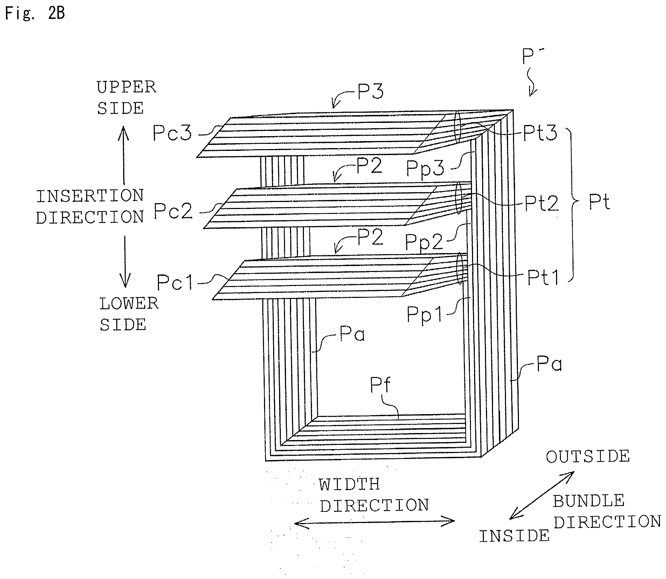

A bent coil bundle P' will be described with reference to Fig. 2B. Note that Fig. 2B is a schematic view of the bent coil bundle P'.

The bent coil bundle P' is formed by bending the annular coil bundle P using the winding mold 110 described later in bending steps S141, S142, and S143 described later. "Bending" the annular coil bundle P means that the ceiling portion Pc is tilted inward in the bundle direction, and the column portion Pp is bent in a straight or curved shape following the tilted ceiling portion Pc. Of the bent column portion Pp, a portion that passes through the slot opening 22 in the insertion step S160 described later is referred to as a passing portion Pt.

Here, of the bent column portion Pp1, a portion that passes through the slot opening 22 in the insertion step S160 described later is referred to as a passing portion Pt1. Of the bent column portion Pp2, a portion that passes through the slot opening 22 in the insertion step S160 described later is referred to as a passing portion Pt2. Of the bent column portion Pp3, a portion that passes through the slot opening 22 in the insertion step S160 described later is referred to as a passing portion Pt3.

The lengths of the passing portions Pt1, Pt2, and Pt3 in the width direction are smaller than the length of the slot opening 22 in the circumferential direction of the stator reference. Additionally, the passing portions Pt1, Pt2, and Pt3 are stacked in the insertion direction.

### <2-2. Winding mold>

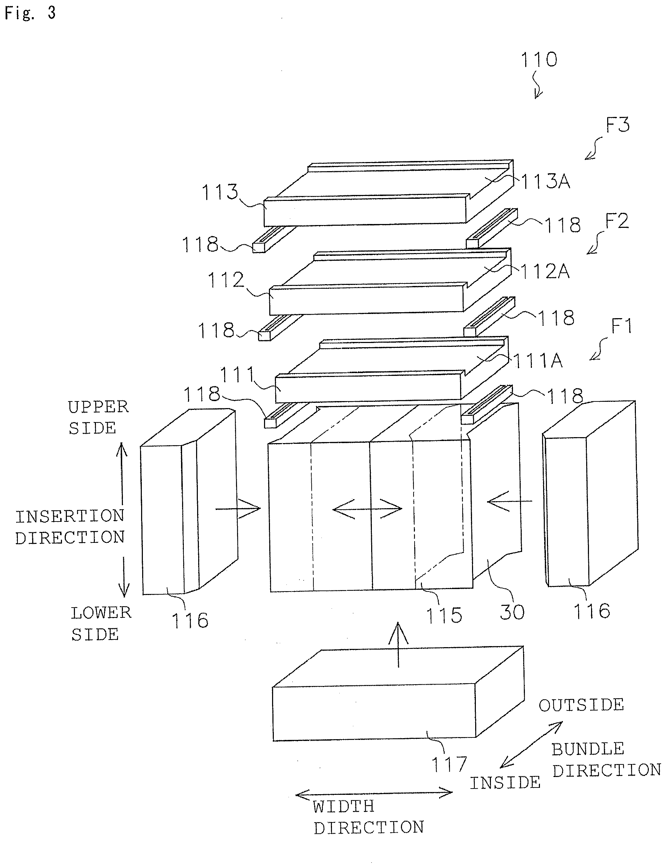

The winding mold 110 will be described with reference to Fig. 3. Note that Fig. 3 is a schematic view of the winding mold 110. Additionally, the winding mold 110 will be described according to the annular coil bundle reference.

The winding mold 110 is used in the coil winding step S110 to a compression step S153, which will be described later. The winding mold 110 includes a main body 115, support portions 111, 112, 113, slide portions 116, 117, and guide portions 118.

### <2-2-1. Main body>

The main body 115 is formed in a substantially rectangular parallelepiped. The length of the main body 115 in the insertion direction is substantially the same as the length of the stator core 20 in the axial direction of the stator reference. The length of the main body 115 in the bundle direction is substantially the same as the length of the slot 21 of the stator core 20 in the radial direction of the stator reference. The length of the main body 115 in the width direction is substantially the same as the distance between two slots 21 of the stator core 20 into which the annular coil bundle P is inserted. Note that "substantially the same" means the same except for dimensional tolerances and the gap at the time of winding.

Here, of surfaces of the main body 115 formed in the width direction and the bundle direction, an upper surface is referred to as "ceiling surface" and a lower surface is referred to as "bottom surface". Surfaces of the main body 115 formed in the insertion direction and the bundle direction are referred to as "side surface". Of surfaces of the main body 115 formed in the insertion direction and the width direction, one surface is referred to as "front surface" and the other surface is referred to as "back surface".

The main body 115 is expanded and contracted in a predetermined direction, such as in the width direction. With this configuration, in a stator manufacturing process S100, the bent coil bundle P' wound around the main body 115 can be removed from the main body 115.

### <2-2-2. Support portion>

The lengths of the support portions 111, 112, 113 in the bundle direction are substantially the same as the length of the main body 115 in the bundle direction. The lengths of the support portions 111, 112, 113 in the width direction are substantially the same as the length of the main body 115 in the width direction.

The support portions 111, 112, 113 are each supported an arm (not shown). Each arm is rotatably supported at a predetermined position (not shown) of the main body 115.

The support portion 111 is supported to the main body 115 by the arm. The arm is rotatably supported at a predetermined position of the main body 115. The arm is rotatably supported by an electric motor. A recess 111A is formed in the support portion 111.

The support portion 112 is supported to the main body 115 by the arm. The arm is rotatably supported at a predetermined position of the main body 115. The arm is rotatably supported by an electric motor. A recess 112A is formed in the support portion 112.

The support portion 113 is supported to the main body 115 by the arm. The arm is rotatably supported at a predetermined position of the main body 115. The arm is rotatably supported by an electric motor. A recess 113A is formed in the support portion 113.

Here, of surfaces of the support portion 111 formed in the width direction and the bundle direction, an upper surface is referred to as "ceiling surface" and a lower surface is referred to as "bottom surface". Surfaces of the support portion 111 formed in the insertion direction and the bundle direction are referred to as "side surfaces". Of surfaces of the support portion 111 formed in the insertion direction and the width direction, one surface is referred to as "front surface" and the other surface is referred to as "back surface". The same applies to the support portion 112 and the support portion 113.

Here, a form formed of both side surfaces of the main body 115, the bottom surface of the main body 115, both side surfaces of the support portion 111, and the recess 111A of the support portion 111 is referred to as a lower form F1. A form formed of both side surfaces of the main body 115, the bottom surface of the main body 115, both side surfaces of the support portion 112, and the recess 112A of the support portion 112 is referred to as a middle form F2. A form formed of both side surfaces of the main body 115, the bottom surface of the main body 115, both side surfaces of the support portion 113, and the recess 113A of the support portion 113 is referred to as an upper form F3.

### <2-2-3. Slide portion>

The slide portions 116 are provided at positions facing both side surfaces of the main body 115, respectively. The slide portion 117 is provided at a position facing the bottom surface of the main body 115. The slide portions 116 and the slide portion 117 protrude and retract to and from the main body 115 by a pneumatic cylinder.

### <2-2-4. Guide portion>

The guide portion 118 is provided at each of the passing portions Pt1, Pt2, Pt3 when the bent coil bundle P' shown in Fig. 2B is formed on the winding mold 110. A recess is formed in the guide portion 118. The length of the recess in the width direction is substantially the same as the length of the passing portion Pt1, Pt2, Pt3 in the width direction. Note that "substantially the same" means the same except for dimensional tolerances and the gap at the time of compression.

### <2-3. Stator manufacturing process>

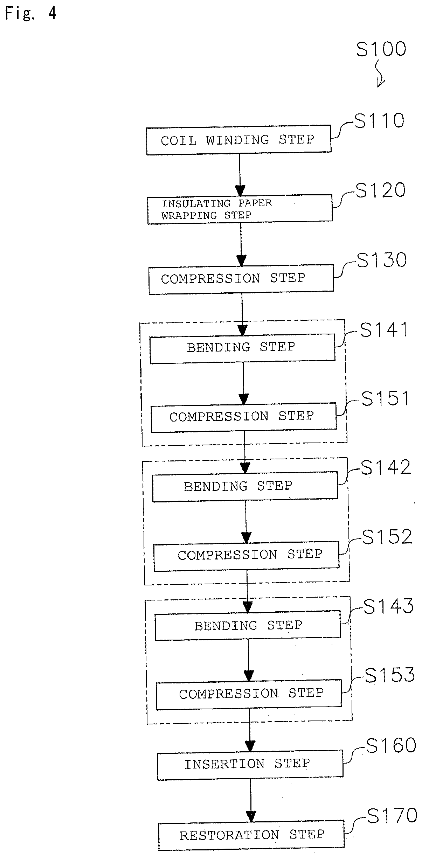

The stator manufacturing process S100 will be described with reference to Fig. 4. Note that Fig. 4 shows the stator manufacturing process S100 in a flow.

In the stator manufacturing process S100, the annular coil bundle P shown in Fig. 2A is formed from the coil 10, the annular coil bundle P is transformed into the bent coil bundle P' shown in Fig. 2B, and the bent coil bundle P' is inserted into two slots 21 from the axial direction to manufacture the stator 100.

The stator manufacturing process S100 includes the coil winding step S110, an insulating paper wrapping step S120, the compression step S130, a bending step S141, a compression step S151, a bending step S142, a compression step S152, a bending step S143, the compression step S153, the insertion step S160, and a restoration step S170.

### <2-3-1. Coil winding step>

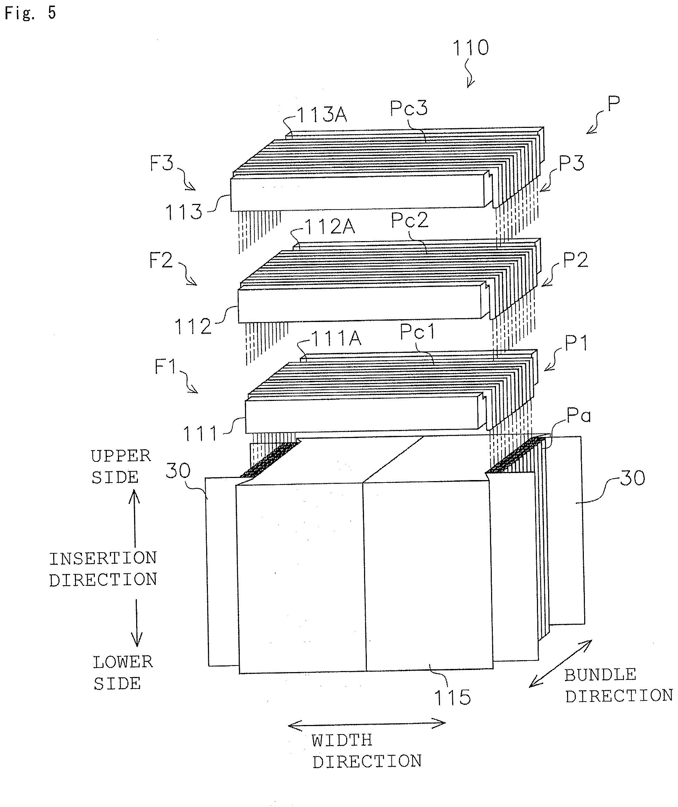

The coil winding step S110 will be described with reference to Fig. 5. Note that Fig. 5 is a schematic view of the coil winding step S110. Additionally, in the following, to facilitate understanding of the figure, the coil 10 is partially omitted. Moreover, the coil winding step S110 to the compression step S153 will be described according to the annular coil bundle reference.

In the coil winding step S110, the coil 10 is wound around the winding mold 110 to form the annular coil bundle P. Additionally, the winding mold 110 is provided with the insulating paper 30 in advance.

First, the insulating paper 30 is provided on both side surfaces of the main body 115. When arranging the insulating paper 30 on both side surfaces of the main body 115, the insulating paper 30 may be temporarily arranged on both side surfaces of the main body 115 with an adhesive. Alternatively, the insulating paper 30 may be temporarily arranged on both side surfaces of the main body 115 by gripping the insulating paper 30 by a gripping tool which is not shown. Additionally, the insulating paper 30 may be arranged on the bottom surface of the main body 115 in a similar manner.

Next, the coil 10 is wound around the lower form F1 to form the lower coil bundle P1. When winding the coil 10 around the lower form F1, the coil 10 may be pulled out from a coil drawing device which is not shown, and be wound by rotating the lower form F1 about an annular shaft. Alternatively, the coil 10 pulled out from the coil drawing device may be wound around a fixed lower form F1.

The coil 10 is wound around the support portion 111 while being supported by the recess 111A, and the ceiling portion Pc1 of the lower coil bundle P1 is formed.

Next, the coil 10 is wound around the middle form F2 to form the middle coil bundle P2. When winding the coil 10 around the middle form F2, the coil 10 may be pulled out from the coil drawing device, and be wound by rotating the lower form F1 and the middle form F2 about the annular shaft. Alternatively, the coil 10 pulled out from the coil drawing device may be wound around a fixed middle form F2.

The coil 10 is wound around the support portion 112 while being supported by the recess 112A, and the ceiling portion Pc2 of the middle coil bundle P2 is formed.

Next, the coil 10 is wound around the upper form F3 to form the upper coil bundle P3. When winding the coil 10 around the middle form F2, the coil 10 may be pulled out from the coil drawing device, and be wound by rotating the lower form F1, the middle form F2, and the upper form F3 about the annular shaft. Alternatively, the coil 10 pulled out from the coil drawing device may be wound around a fixed upper form F3.

The coil 10 is wound around the support portion 113 while being supported by the recess 113A, and the ceiling portion Pc3 of the upper coil bundle P3 is formed.

### <2-3-2. Insulating paper wrapping step>

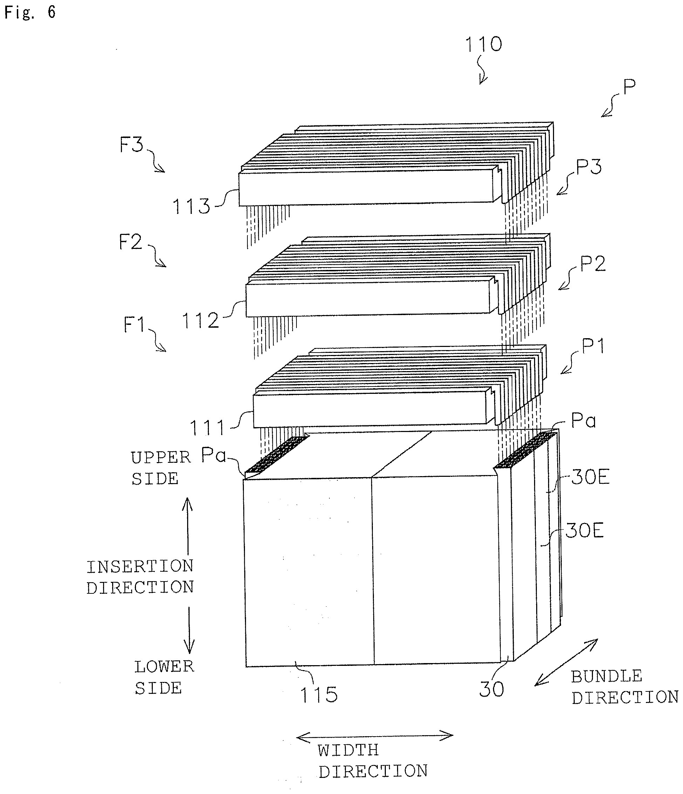

The insulating paper wrapping step S120 will be described with reference to Fig. 6. Note that Fig. 6 is a schematic view of the insulating paper wrapping step S120.

In the insulating paper wrapping step S120, the insulating paper 30 sandwiched between the side surface of the main body 115 and the aligned portion Pa in the coil winding step S110 is wrapped around the aligned portion Pa of the annular coil bundle P. At this time, the insulating paper 30 is wrapped so that the edge portion 30E and the edge portion 30E of the insulating paper 30 overlap one another by a predetermined width on a side surface of the aligned portion Pa on the outside in the width direction. The predetermined width is 1/5 or more of the length in the bundle direction of the side surface of the aligned portion Pa on the outside in the width direction.

When wrapping the insulating paper 30 around the aligned portion Pa, the insulating paper 30 may be fixed to the aligned portion Pa of the annular coil bundle P with an adhesive. Alternatively, the edge portion 30E and the edge portion 30E of the insulating paper 30 may be fixed with an adhesive.

### <2-3-3. Compression step>

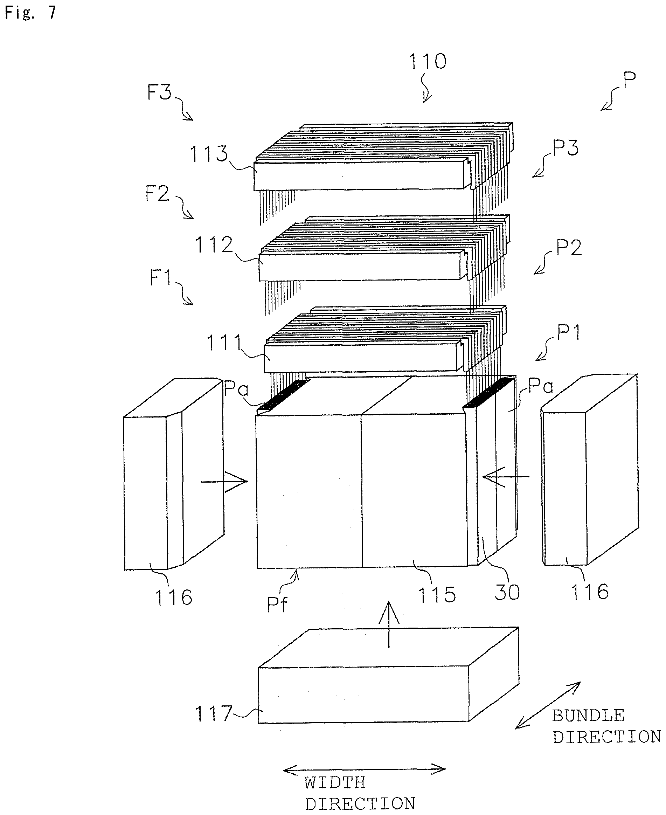

The compression step S130 will be described with reference to Fig. 7. Note that Fig. 7 is a schematic view of the compression step S130.

In the compression step S130, the aligned portion Pa and the bottom portion Pf are compressed by pressing the slide portions 116 and the slide portion 117 against the annular coil bundle P wound around the main body 115. In the compression step S130, the shape of the aligned portion Pa is formed according to the side surface shape of the main body 115 of the winding mold 110 and the side surface shape of the slide portion 116 facing the side surface shape of the main body 115.

In the compression step S130, first, the slide portions 116 protrude toward both side surfaces of the main body 115, and the slide portions 116 are pressed against the aligned portion Pa around which the insulating paper 30 is wrapped to compress the aligned portion Pa. In other words, in the compression step S130, the entire aligned portion Pa is simultaneously compressed from the outside in the width direction.

As a result, the aligned portion Pa is compressed and aligned so that the gap between the coils 10 and the gap between the coil 10 and the main body 115 are reduced. Additionally, the coil 10 of the aligned portion Pa is compressed in the radial direction of the coil reference. Note that "coil reference" is different from the above-mentioned stator reference and annular coil bundle reference, and the direction is based on one coil 10 alone. That is, the radial direction of the coil reference is one of the directions extending radially from the axis of the coil 10.

Next, the slide portion 117 protrudes toward the bottom surface of the main body 115, and compresses the bottom portion Pf of the annular coil bundle P by pressing the slide portion 117 against the bottom portion Pf. As a result, the bottom portion Pf is aligned without gaps. Additionally, the coil 10 at the bottom portion Pf is compressed in the radial direction of the coil reference.

In this way, the aligned portion Pa of the annular coil bundle P can be aligned without gaps, and the coil 10 of the aligned portion Pa can be compressed in the radial direction of the coil reference. As a result, the space factor of the stator 100 can be improved.

In the compression step S130 of the present embodiment, the slide portions 116 are pressed to compress the aligned portion Pa in the width direction, but the present invention is not limited to this. The aligned portion Pa may also be compressed in the bundle direction. Specifically, for example, the slide portions 116 are pressed against the aligned portion Pa in the bundle direction.

In the compression step S130 of the present embodiment, the slide portions 116 are pressed to perform compression. However, the present invention is not limited to this. For example, rollers may be pressed against the aligned portion Pa to compress the aligned portion Pa simultaneously in a stepwise manner from the outside in the width direction. When pressing the rollers, the rollers may be pressed stepwise from the lower side to the upper side along the insertion direction, or the rollers may be pressed stepwise from the upper side to the lower side along the insertion direction. Alternatively, the rollers may be pressed stepwise from the inside to the outside along the bundle direction, or the rollers may be pressed stepwise from the outside to the inside along the bundle direction.

In this way, when compressing by pressing the rollers, the aligned portion Pa can be compressed with a smaller pressing force as compared with the case of compressing by pressing the slide portions 116.

### <2-3-4-1. Bending step>

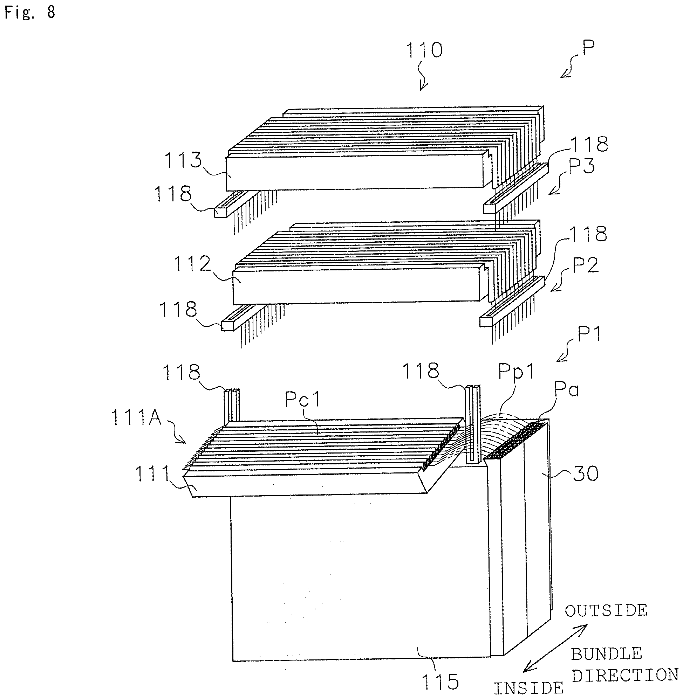

The bending step S141 will be described with reference to Fig. 8. Note that Fig. 8 is a schematic view of the bending step S141.

In the bending step S141, the lower coil bundle P1 is bent inward in the bundle direction. Specifically, by rotating the support portion 111 inward in the bundle direction by a predetermined angle such as approximately 60 degrees, the ceiling portion Pc1 of the lower coil bundle P1 is tilted and the column portion Pp1 of the lower coil bundle P1 is bent.

In the bending step S141, the support portion 111 is rotated inward in the bundle direction by a predetermined angle, such as approximately 60 degrees, by an electric motor. At this time, the ceiling portion Pc1 of the lower coil bundle P1 is tilted inward in the bundle direction while being supported by the recess 111A. At the same time, the column portion Pp1 of the lower coil bundle P1 is bent following the ceiling portion Pc1. At this time, the column portion Pp1 is formed in an arc shape.

In the bending step S141, the guide portion 118 nips the column portion Pp1 of the lower coil bundle P1 in the recess in a state substantially parallel to the bundle direction. When the column portion Pp1 of the lower coil bundle P1 is bent, the guide portion 118 is substantially parallel to the height direction.

### <2-3-4-2. Compression step>

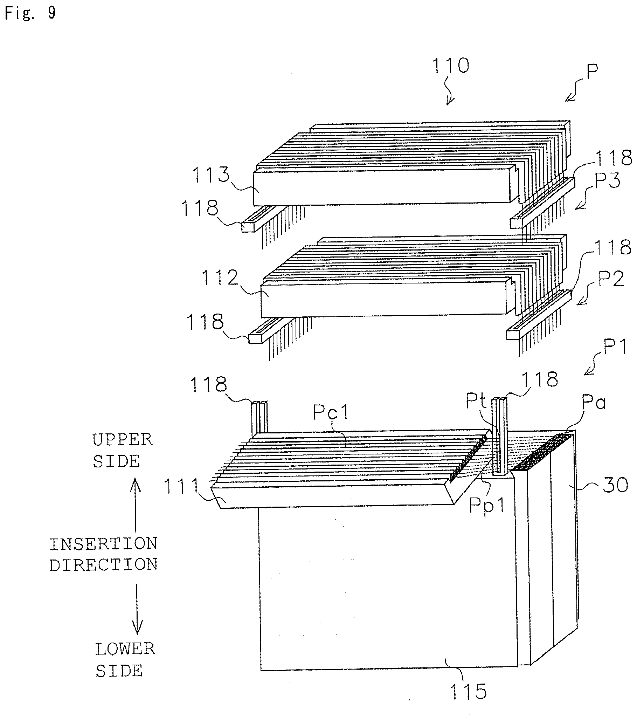

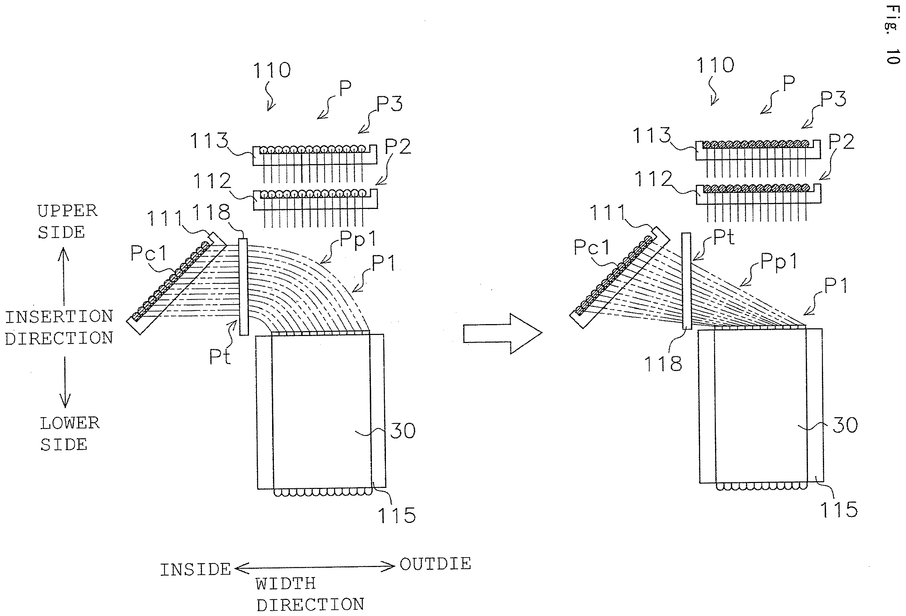

The compression step S151 will be described with reference to Figs. 9 and 10. Note that Figs. 9 and 10 are schematic views of the compression step S151.

In the compression step S151, the passing portion Pt1 is compressed by pressing a slide portion, which is not shown, against the passing portion Pt1. Note that the passing portion Pt1 passes through the slot opening 22 when the bent coil bundle P' is inserted into the stator core 20 in the insertion step S160 described later.

In the compression step S151, by pressing the slide portion against the passing portion Pt1, the passing portion Pt1 nipped in the recess of the guide portion 118 is pressed downward, and the passing portion Pt1 is compressed. At this time, the column portion Pp1 including the passing portion Pt1 is pressed downward while being nipped in the recess of the guide portion 118, and is deformed from the arc shape to a linear shape. As a result, the passing portion Pt1 is compressed so that the gap between the coils 10 of the passing portion Pt1 becomes small. Moreover, the coil 10 of the passing portion Pt1 is compressed in the radial direction of the coil reference.

In this way, the length of the bent column portion Pp1 can be minimized. As a result, the overall length of the coil 10 can be shortened. Additionally, the length of the passing portion Pt1 in the insertion direction can be shortened. That is, the passing portion Pt1 can be stacked from a low position in the height direction. As a result, the length of the coil 10 can be shortened, and the length of the coil end of the stator 100 can be shortened.

### <2-3-5-1. Bending step>

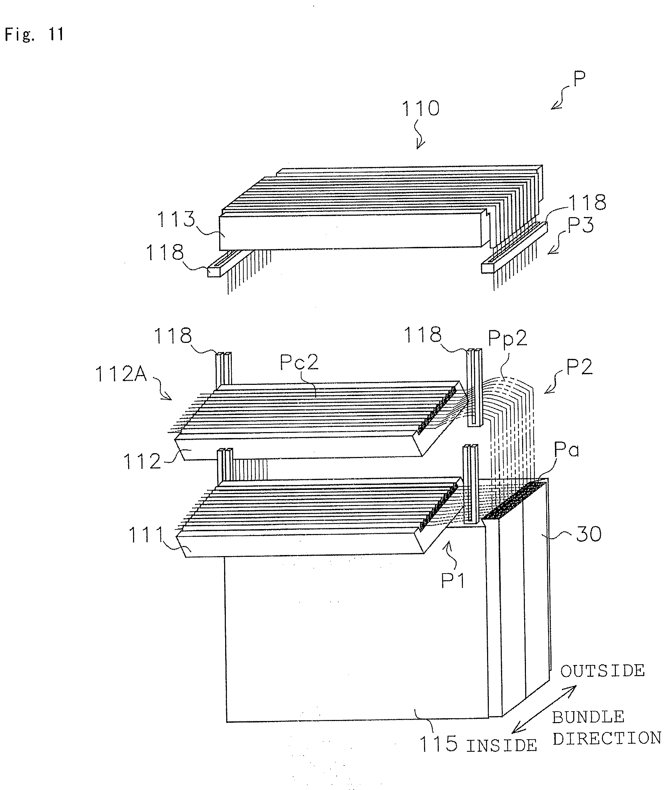

The bending step S142 will be described with reference to Fig. 11. Note that Fig. 11 is a schematic view of the bending step S142.

In the bending step S142, the middle coil bundle P2 is bent inward in the bundle direction. Specifically, by rotating the support portion 112 inward in the bundle direction by a predetermined angle such as approximately 60 degrees, the ceiling portion Pc2 of the middle coil bundle P2 is tilted and the column portion Pp2 of the middle coil bundle P2 is bent.

In the bending step S142, the support portion 112 is rotated inward in the bundle direction by a predetermined angle, such as approximately 60 degrees, by an electric motor. At this time, the ceiling portion Pc2 of the middle coil bundle P2 is tilted inward in the bundle direction while being supported by the recess 112A. At the same time, the column portion Pp2 of the middle coil bundle P2 is bent following the ceiling portion Pc2. At this time, the column portion Pp2 is formed in an arc shape.

In the bending step S142, the guide portion 118 nips the column portion Pp2 of the middle coil bundle P2 in the recess in a state substantially parallel to the bundle direction. When the column portion Pp2 of the middle coil bundle P2 is bent, the guide portion 118 is substantially parallel to the height direction.

### <2-3-5-2. Compression step>

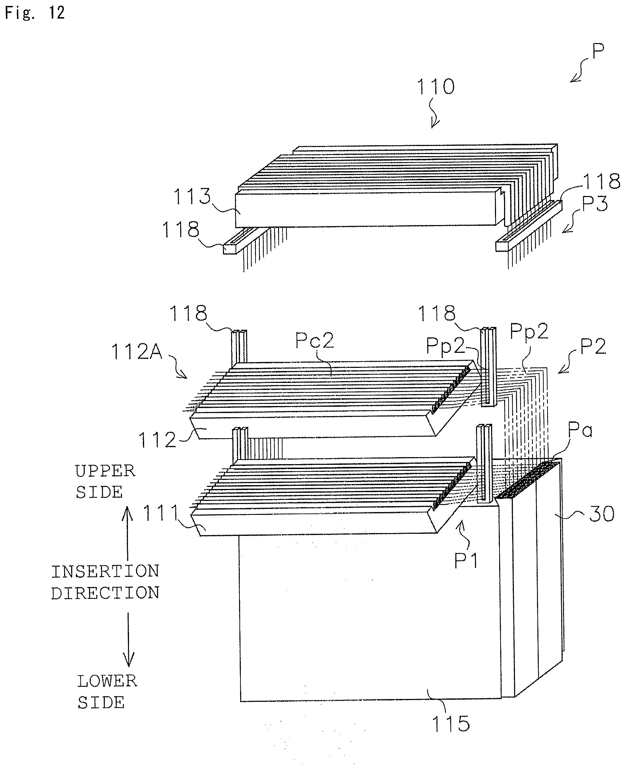

The compression step S152 will be described with reference to Fig. 12. Note that Fig. 12 is a schematic view of the compression step S152.

In the compression step S152, the passing portion Pt2 is compressed by pressing a slide portion, which is not shown, against the passing portion Pt2. Note that the passing portion Pt2 passes through the slot opening 22 when the bent coil bundle P' is inserted into the stator core 20 in the insertion step S160 described later.

In the compression step S152, by pressing the slide portion against the passing portion Pt2, the passing portion Pt2 nipped in the recess of the guide portion 118 is pressed downward, and the passing portion Pt2 is compressed. At this time, the column portion Pp2 including the passing portion Pt2 is pressed downward while being nipped in the recess of the guide portion 118, and is deformed from the arc shape to a linear shape. As a result, the passing portion Pt2 is compressed so that the gap between the coils 10 of the passing portion Pt2 becomes small. Moreover, the coil 10 forming the passing portion Pt2 is compressed in the radial direction of the coil reference.

In this way, the length of the column portion Pp2 can be minimized. As a result, the length of the coil 10 can be shortened. Additionally, the length of the passing portion Pt3 in the insertion direction can be shortened. That is, the passing portion Pt2 can be stacked from a low position in the height direction. As a result, the length of the coil 10 can be shortened, and the length of the coil end of the stator 100 can be shortened.

### <2-3-6-1. Bending step>

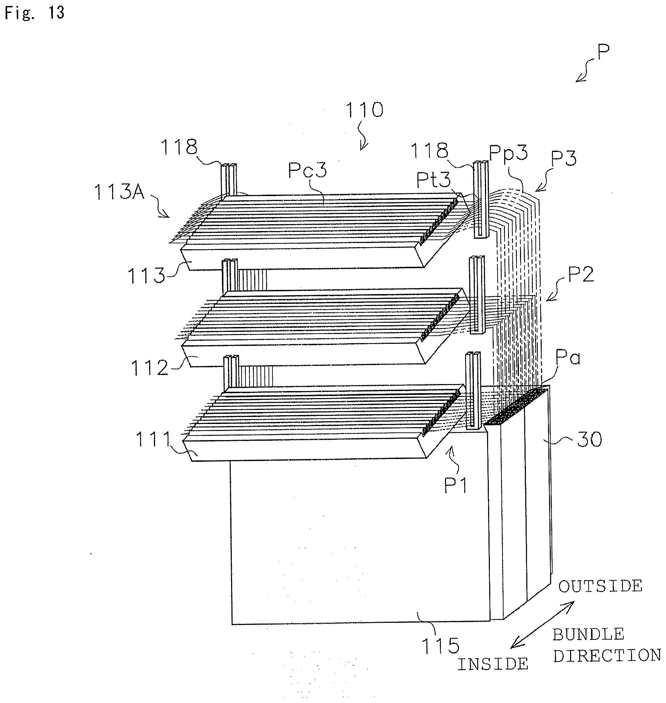

The bending step S143 will be described with reference to Fig. 13. Note that Fig. 13 is a schematic view of the bending step S143.

In the bending step S143, the upper coil bundle P3 is bent inward in the bundle direction. Specifically, by rotating the support portion 113 inward in the bundle direction by a predetermined angle such as approximately 60 degrees, the ceiling portion Pc3 of the upper coil bundle P3 is tilted and the column portion Pp3 of the upper coil bundle P3 is bent.

In the bending step S143, the support portion 113 is rotated inward in the bundle direction by a predetermined angle, such as approximately 60 degrees, by an electric motor. At this time, the ceiling portion Pc3 of the upper coil bundle P3 is tilted inward in the bundle direction while being supported by the recess 113A. At the same time, the column portion Pp3 of the upper coil bundle P3 is bent following the ceiling portion Pc3. At this time, the column portion Pp3 is formed in an arc shape.

In the bending step S143, the guide portion 118 nips the column portion Pp3 of the upper coil bundle P3 in the recess in a state substantially parallel to the bundle direction. When the column portion Pp3 of the upper coil bundle P3 is bent, the guide portion 118 is substantially parallel to the height direction.

### <2-3-6-2. Compression step>

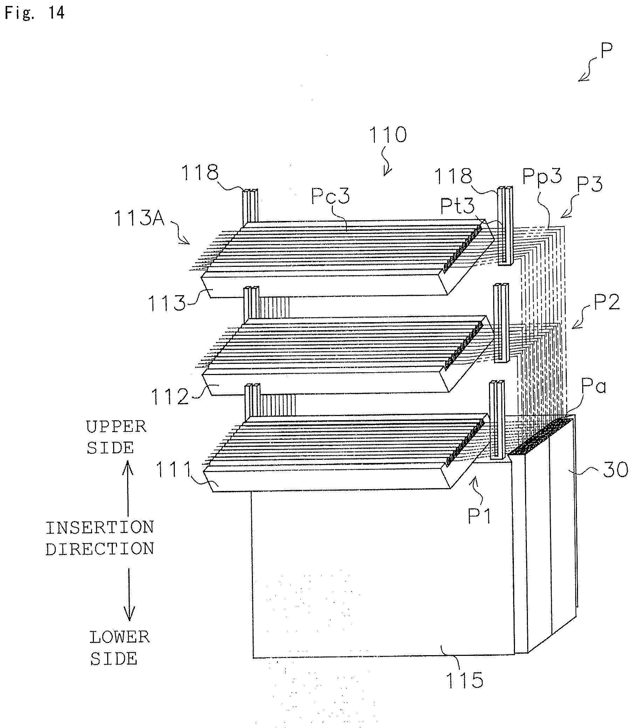

The compression step S153 will be described with reference to Fig. 14. Note that Fig. 14 is a schematic view of the compression step S153.

In the compression step S153, the passing portion Pt3 is compressed by pressing a slide portion, which is not shown, against the passing portion Pt3. Note that the passing portion Pt3 passes through the slot opening 22 when the bent coil bundle P' is inserted into the stator core 20 in the insertion step S160 described later.

In the compression step S153, by pressing the slide portion against the passing portion Pt3, the passing portion Pt3 nipped in the recess of the guide portion 118 is pressed downward, and the passing portion Pt3 is compressed. At this time, the column portion Pp3 including the passing portion Pt3 is pressed downward while being nipped in the recess of the guide portion 118, and is deformed from the arc shape to a linear shape. As a result, the passing portion Pt3 is compressed so that the gap between the coils 10 of the passing portion Pt3 becomes small. Moreover, the coil 10 forming the passing portion Pt3 is compressed in the radial direction of the coil reference.

In this way, the length of the column portion Pp3 can be minimized. As a result, the length of the coil 10 can be shortened. Addition, the length of the passing portion Pt3 in the insertion direction can be shortened. As a result, the length of the coil 10 can be shortened, and the length of the coil end of the stator 100 can be shortened.

### <2-3-7. Insertion step>

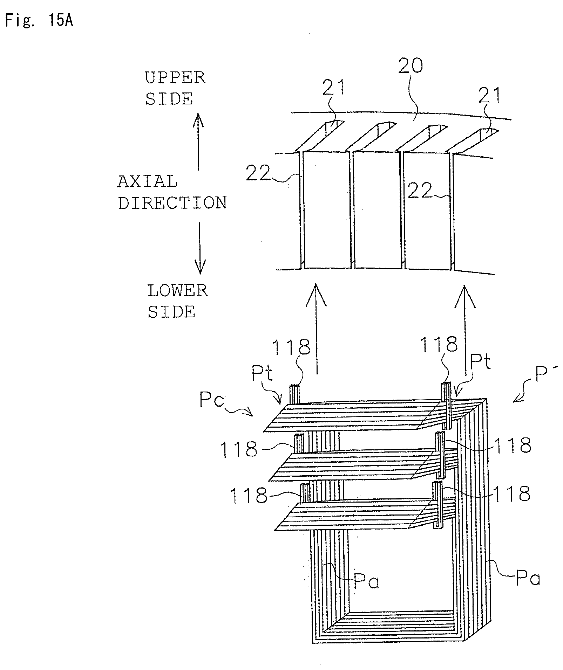

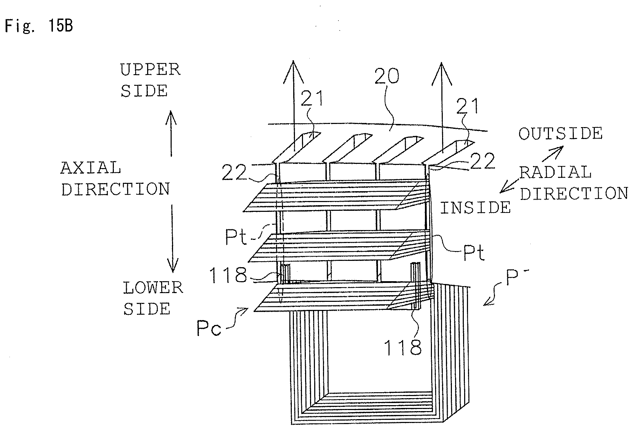

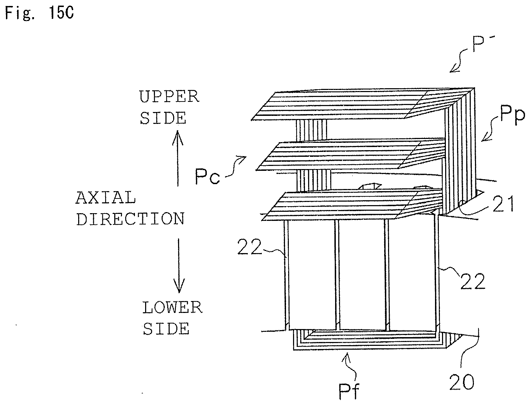

The insertion step S160 will be described with reference to Figs. 15A, 15B, and 15C. Note that Figs. 15A, 15B, and 15C are schematic views of the insertion step S160. Additionally, Figs. 15A, 15B, and 15C show the progress of the insertion step S160 in the order of Figs. 15A, 15B, and 15C.

The insertion step S160 and the restoration step S170 will be described according to the stator reference. Note that the axial direction of the stator reference and the insertion direction of the annular coil bundle reference are the same direction.

In the insertion step S160, the bent coil bundle P' is inserted in the axial direction toward two slots 21 of the stator core 20. Note that, in the present embodiment, the two slots 21 into which the bent coil bundle P' is inserted are one slot 21 and another slot 21 sandwiching the two slots 21. However, the present invention is not limited to this.

As shown in Fig. 15A, first, the bent coil bundle P' is arranged below the stator core 20 in the axial direction. At this time, the bent coil bundle P' is arranged with respect to the stator core 20 in a state where the passing portion Pt is located below the slot opening 22 in the axial direction. Additionally, the bent coil bundle P' is arranged with respect to the stator core 20 in a state where the aligned portion Pa is located below the slot 21. Moreover, the bent coil bundle P' is arranged with respect to the stator core 20 with the ceiling portion Pc directed inward in the radial direction.

As shown in Fig. 15B, next, the bent coil bundle P' is moved upward in the axial direction, and the outer portion in the radial direction of the column portion Pp, which is not shown, is inserted into the slot 21. At this time, the passing portion Pt passes through the slot opening 22, and the ceiling portion Pc passes through the inside of the stator core 20 in the radial direction.

At this time, since the passing portion Pt is nipped in the guide portion 118, the passing portion Pt can be smoothly guided to the slot opening 22. Note that the guide portion 118 may be removed from the passing portion Pt before the passing portion Pt passes through the slot opening 22.

As shown in Fig. 15C, the bent coil bundle P' is further moved upward in the axial direction, and the aligned portion Pa (not shown) is inserted into the slot 21. At this time, the ceiling portion Pc and the column portion Pp move to an area above the stator core 20. Additionally, the bottom portion Pf straddles the slots 21 at a bottom portion of the stator core 20.

In the insertion step S160, when the bent coil bundle P' is inserted in the axial direction toward the slot 21, the operator may manually insert the bent coil bundle P'. Alternatively, the bent coil bundle P' may be automatically inserted into the stator core 20 by using an insertion device.

### <2-3-8. Restoration step>

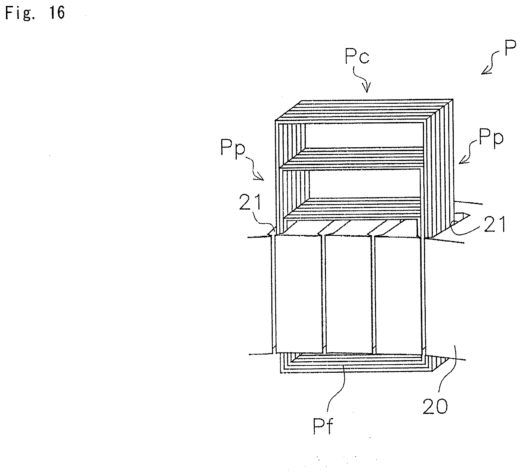

The restoration step S170 will be described with reference to Fig. 16. Note that Fig. 16 is a schematic view of the restoration step S170.

In the restoration step S170, the bent coil bundle P' is transformed into the annular coil bundle P, which is the original shape thereof. When transforming the bent coil bundle P' into the annular coil bundle P, it may be transformed by the work of an operator. Alternatively, the bent coil bundle P' may be automatically restored by using a restoration device that rotates the ceiling portion Pc to transform the column portion Pp so that it becomes parallel to the insertion direction.

In the restoration step S170, the aligned portion Pa, which is not shown, of the annular coil bundle P is housed in the slot 21 and the bottom portion Pf straddles the slots 21.

### <2-4. Effect>

In this way, in the stator manufacturing process S100, the stator 100 having a high space factor can be manufactured. That is, the annular coil bundle P is formed to compress the aligned portion Pa, the annular coil bundle P is transformed into the bent coil bundle P', and the aligned portion Pa is housed in the slot 21 while passing the passing portion Pt through the slot opening 22. Thus, the stator 100 having a high space factor can be manufactured.

### <Embodiment 2>

Embodiment 2 will be described. Note that, in the following, the description of matters common to Embodiment 1 will be omitted. Additionally, the reference, the definition of words, and the method of assigning signs are the same as those in Embodiment 1.

### <3-1-1. Annular coil bundle>

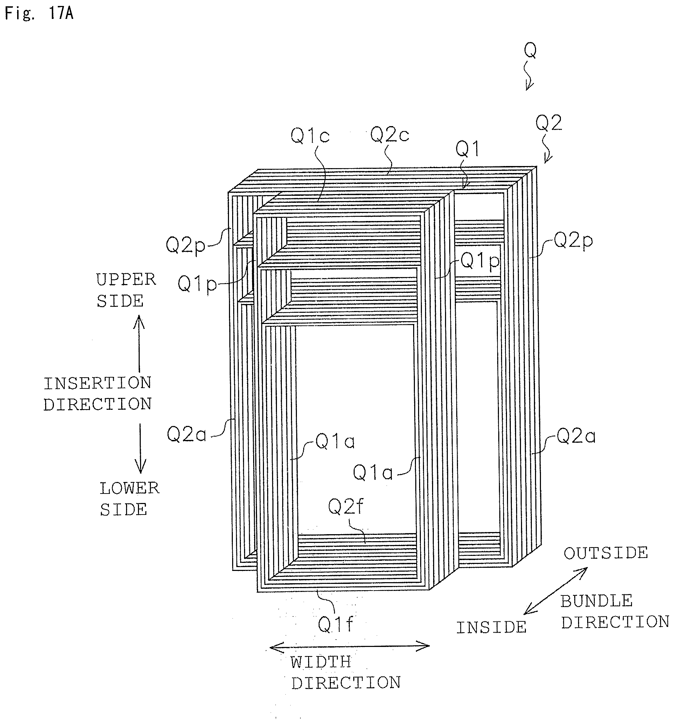

An annular coil bundle Q will be described with reference to Fig. 17A. Note that Fig. 17A is a schematic view of the annular coil bundle Q. Additionally, in the following, the description will be given according to the annular coil bundle reference.

The annular coil bundle Q is formed by winding a coil 10 around a winding mold 210 described later in a coil winding step S210 to a compression step S230 described later. The annular coil bundle Q is formed by winding one coil 10 with multiple turns. The annular coil bundle Q is formed in two substantially rectangular shapes when viewed from the bundle direction.

The annular coil bundle Q includes a first annular coil bundle Q1 and a second annular coil bundle Q2. The lengths of the first annular coil bundle Q1 in the bundle direction and the insertion direction are substantially the same as the lengths of the second annular coil bundle Q2 in the bundle direction and the insertion direction. The width direction length of the first annular coil bundle Q1 is smaller than the width direction length of the second annular coil bundle Q2.

The first annular coil bundle Q1 and the second annular coil bundle Q2 are formed adjacent to each other in the bundle direction. The first annular coil bundle Q1 and the second annular coil bundle Q2 are formed with substantially the same center in the width direction.

Here, ceiling portions Q1c, Q2c, bottom portions Q1f, Q2f, column portions Q1p, Q2p, and aligned portions Q1a, Q2a of the first and second annular coil bundles Q1, Q2 are the same as the ceiling portion Pc, bottom portion Pf, column portion Pp, and aligned portion Pa of Embodiment 1, and therefore the description is omitted. Additionally, a lower coil bundle, a middle coil bundle, and an upper coil bundle are the same as the lower coil bundle PI, the middle coil bundle P2, and the upper coil bundle P3 of Embodiment 1, and therefore the description will be omitted.

### <3-1-2. Bent coil bundle>

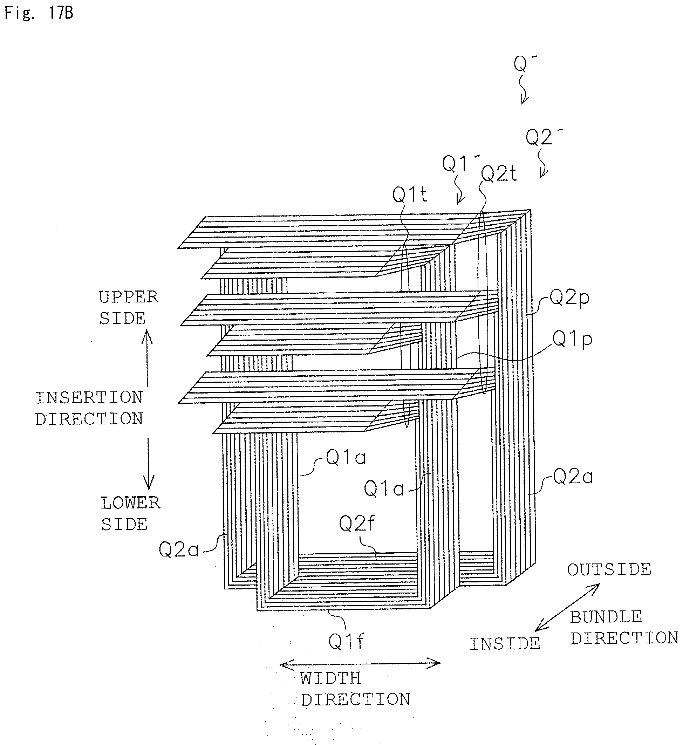

A bent coil bundle Q' will be described with reference to Fig. 17B. Note that Fig. 17B is a schematic view of the bent coil bundle Q'.

The bent coil bundle Q' is formed by bending the first annular coil bundle Q1 and the second annular coil bundle Q2 using the winding mold 210 described later, in bending steps S241, S242, and S243 described later.

Of the bent column portion Q1p, a portion that passes through a slot opening 22 in an insertion step S260 described later is referred to as a passing portion Q1t. Of the bent column portion Q2p, a portion that passes through the slot opening 22 in the insertion step S260 described later is referred to as a passing portion Q2t.

### <3-2. Winding mold>

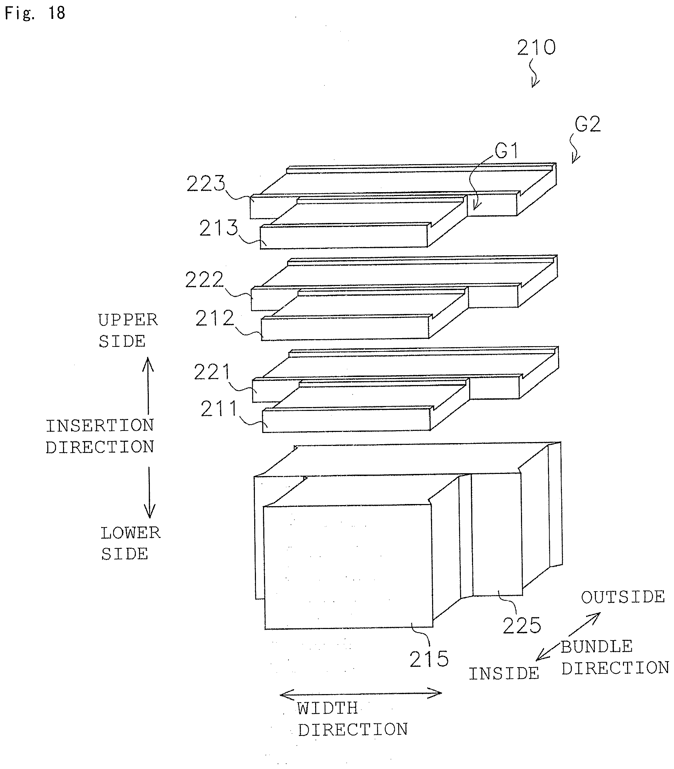

The winding mold 210 will be described with reference to Fig. 18. Note that Fig. 18 is a schematic view of the winding mold 210. Additionally, the winding mold 210 will be described according to the annular coil bundle reference.

The winding mold 210 is used in the coil winding step S210 to the compression step S253, which will be described later. The winding mold 210 includes main bodies 215, 225, support portions 211, 221, support portions 212, 222, support portions 213, 223, and a slide portion which is not shown.

The main body 215, the support portion 211, the support portion 212, and the support portion 213 are the same as the main body 115, the support portion 111, the support portion 112, and the support portion 113 of Embodiment 1, and therefore the description will be omitted.

The lengths of the main body 225 in the bundle direction and the insertion direction are substantially the same as the lengths of the main body 215 in the bundle direction and the insertion direction. The width direction length of the main body 225 is larger than the width direction length of the main body 215.

The lengths of the support portion 221 in the bundle direction and the insertion direction is substantially the same as the lengths of the support portion 211 in the bundle direction and the insertion direction. The width direction length of the support portion 221 is larger than the width direction length of the support portion 211. The same applies to the support portion 222 and the support portion 223.

The main body 215 and the main body 225 are provided adjacent to each other in the bundle direction. The main body 215 and the main body 225 are provided with substantially the same center in the width direction.

The support portion 221 and the support portion 211 are provided adjacent to each other in the bundle direction. The support portion 221 and the support portion 211 are provided with substantially the same center in the width direction. The same applies to the support portion 222 and the support portion 223.

Here, as in Embodiment 1, a form formed of the main body 215, the support portion 211, the support portion 212, and the support portion 213 is referred to as a first form G1. Additionally, a form formed of the main body 225, the support portion 221, the support portion 222, and the support portion 223 is referred to as a second form G2.

The width direction length of the first form G1 is larger than the width direction length of the second form G2. Additionally, the first form G1 and the second form G2 are provided adjacent to each other in the bundle direction. Moreover, the first form G1 and the second form G2 are provided with substantially the same center in the width direction.

Note that, although the winding mold 210 includes slide portions that protrude and retract to and from side surfaces and a bottom surface of the main body 215 and the main body 225, the description thereof will be omitted because they are the same as the slide portions 116, 117 of Embodiment 1. Additionally, although the winding mold 210 includes guide portions for the passing portion Q1t and the passing portion Q2t, the description thereof will be omitted because they are the same as the guide portions 118 of Embodiment 1.

### <3-3. Stator manufacturing process>

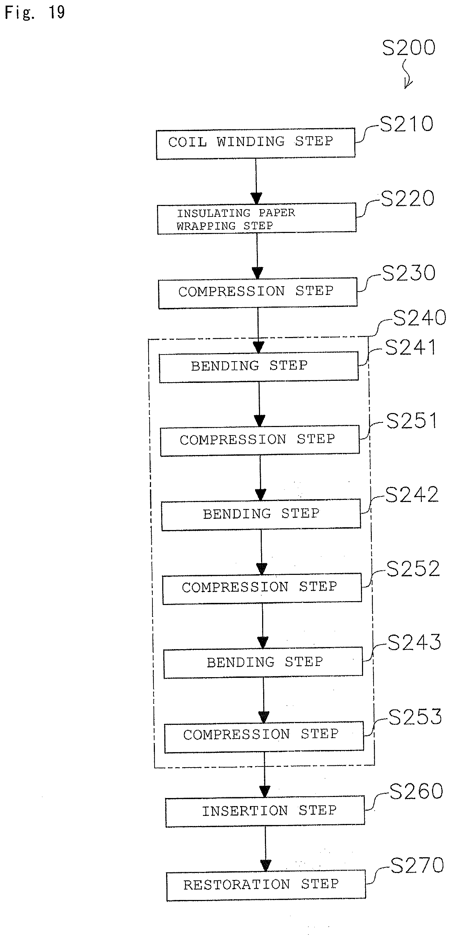

A stator manufacturing process S200 will be described with reference to Fig. 19. Note that Fig. 19 shows the stator manufacturing process S200 in a flow.

In the stator manufacturing process S200, the annular coil bundle Q shown in Fig. 17A is formed from the coil 10, the annular coil bundle Q is transformed into the bent coil bundle Q' shown in Fig. 17B, and the bent coil bundle Q' is inserted into four slots 21 from the axial direction to manufacture a stator 100.

The stator manufacturing process S200 includes the coil winding step S210, an insulating paper wrapping step S220, the compression step S230, a processing step S240, the insertion step S260, and a restoration step S270.

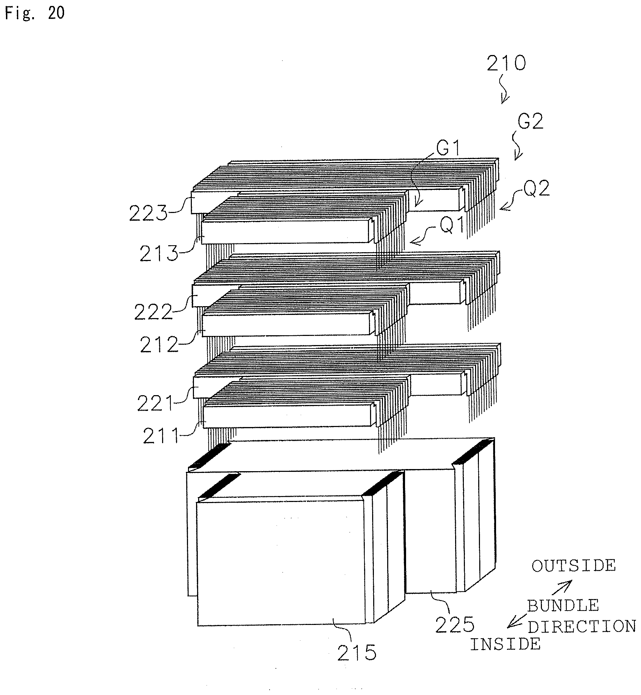

The coil winding step S210 will be described with reference to Fig. 20. Note that Fig. 20 is a schematic view of the coil winding step S210. Additionally, in the following, to facilitate understanding of the figure, the coil 10 is partially omitted. Moreover, the coil winding step S210 and the bending step S241 will be described according to the annular coil bundle reference.

In the coil winding step S210, the coil 10 is wound around the winding mold 210 to form the annular coil bundle Q. First, in the winding mold 210, the main body 215 and the main body 225 are provided with an insulating paper 30 in advance. Next, the coil 10 is wound around the first form G1 to create the first annular coil bundle Q1. Next, the coil 10 is wound around the second form G2 to create the second annular coil bundle Q2.

When winding the coil 10 around the first form G1 or the second form G2, the coil 10 may be pulled out from a coil drawing device which is not shown, and be wound around the first form G1 or the second form G2 by rotating the form about an annular shaft. Alternatively, the coil 10 pulled out from the coil drawing device may be wound around a fixed first form G1 or second form G2.

At this time, since the first form G1 and the second form G2 are provided with substantially the same center in the width direction, the coil 10 can be wound around the first form G1 and the second form G2 at the same time. Additionally, since the first form G1 and the second form G2 are provided adjacent to each other in the bundle direction, the crossover line between the first annular coil bundle Q1 and the second annular coil bundle Q2 can be shortened.

Note that, since the insulating paper wrapping step S220 and the compression step S230 are the same as the insulating paper wrapping step S120 and the compression step S130 of Embodiment 1, the description will be omitted.

In the processing step S240, the upper side, in the insertion direction, of the first annular coil bundle Q1 and the second annular coil bundle Q2 is processed. In the present embodiment, the upper side, in the insertion direction, of the first annular coil bundle Q1 and the second annular coil bundle Q2 is bent in the processing step S240.

In the processing step S240, the first annular coil bundle Q1 and the second annular coil bundle Q2 are bent to compress the passing portions Q1t, Q2t, respectively, but the processing step S240 is not limited to this. For example, the coil ends of the first annular coil bundle Q1 and the second annular coil bundle Q2 may be compressed, the coil ends may be twisted, and a heat radiating material may be applied to the coil ends.

The processing step S240 includes the bending step S241, a compression step S251, the bending step S242, a compression step S252, the bending step S243, and a compression step S253.

### <3-3-1. Bending step>

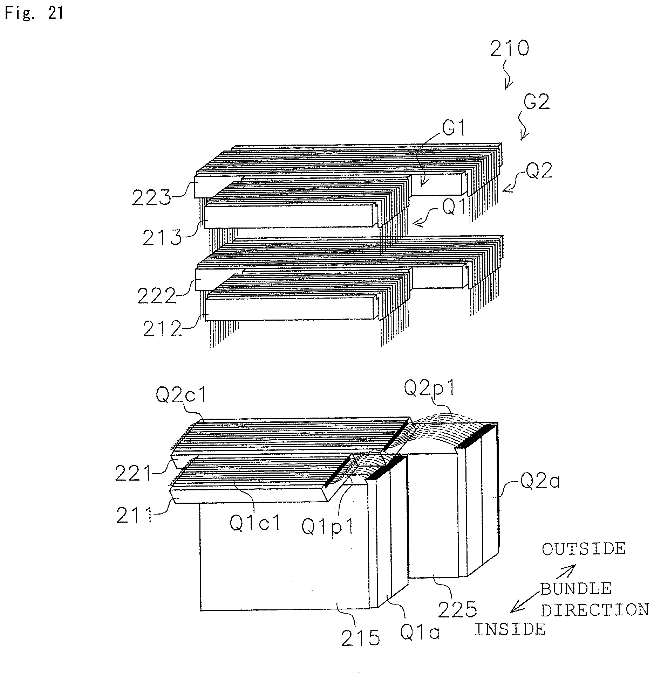

The bending step S241 will be described with reference to Fig. 21. Note that Fig. 21 is a schematic view of the bending step S241.

In the bending step S241, by rotating the support portions 211, 221 inward in the bundle direction by a predetermined angle such as approximately 60 degrees, the ceiling portions Q1c1, Q2c1 are tilted and the column portions Q1p1, Q2p1 are bent at the same time. At this time, since the width direction length of the first form G1 is larger than the width direction length of the second form G2, the first annular coil bundle Q1 and the second annular coil bundle Q2 do not interfere with each other.

Since the bending step S242 and the bending step S243 are the same as the bending step S241, the description thereof will be omitted. The compression step S251, the compression step S252, and the compression step S253 are the same as the compression steps S151, 152, and 153 of Embodiment 1, and therefore the description will be omitted.

### <3-3-2. Insertion step>

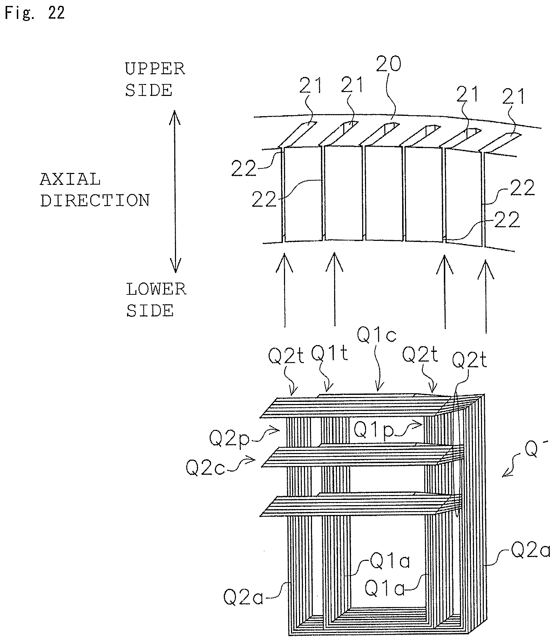

The insertion step S260 will be described with reference to Fig. 22. Note that Fig. 22 is a schematic view of the insertion step S260. Additionally, the insertion step S260 will be described according to the stator reference. Note that the axial direction of the stator reference and the insertion direction of the annular coil bundle reference are the same direction.

In the insertion step S260, the bent coil bundle Q' is inserted in the axial direction toward four slots 21 of a stator core 20.

Note that, in the present embodiment, the four slots 21 into which the bent coil bundle Q' is inserted are one slot 21 and another slot 21 sandwiching two slots 21, and other slots 21 adjacent to the one slot 21 and the another slot 21, respectively, on the outer side in the circumferential direction. However, the present invention is not limited to this.

In the insertion step S260, first, the bent coil bundle Q' is arranged so that the center of a first bent coil bundle Q1' in the bundle direction of the annular coil bundle reference and the center of a second bent coil bundle Q2' in the bundle direction of the annular coil bundle reference are substantially the same.

Next, the bent coil bundle Q' is moved upward in the axial direction, and the aligned portions Q1a, Q2a are inserted into the slots 21. At this time, the ceiling portions Q1c, Q2c and the column portions Q1p, Q2p move to an area above the stator core 20. Additionally, the bottom portions Q1f, Q2f straddle the slots 21 at a bottom portion of the stator core 20.

### <3-4. Effect>

In this way, the first annular coil bundle Q1 and the second annular coil bundle Q2 are simultaneously transformed into the first bent coil bundle Q1' and the second bent coil bundle Q2', and the first bent coil bundle Q1' and the second bent coil bundle Q2' are simultaneously housed in four slots 21. Thus, work efficiency can be improved.

### Reference Signs List

- 10: coil
- 20: stator core
- 21: slot
- 22: slot opening
- 30: insulating paper
- 100: stator
- 110, 210: winding mold
- S100, S200: stator manufacturing process
- P, Q: annular coil bundle
- P', Q': bent coil bundle
- Pa, Qa: aligned portion
- Pt, Qt: passing portion

## Claims

1. A stator manufacturing method comprising:
a bending step of bending one side of an annular coil bundle (P, Q) which includes at least multiple turns of a coil (10); and
an insertion step of inserting the annular coil bundle (P, Q) into a slot (21) of a stator core (20) in an axial direction from the one side.

2. The stator manufacturing method according to claim 1, **characterized in that**
a passing portion is formed in the annular coil bundle (P, Q) by bending one side of the annular coil bundle (P, Q) in the bending step,
a length of the passing portion in a direction orthogonal to an insertion direction and a bundle direction of the annular coil bundle (P, Q) is smaller than an opening width of the slot opening (22), and
the passing portion passes through the slot opening (22) of the slot (21) in the axial direction of the stator (100) in the insertion step.

3. The stator manufacturing method according to claims 1 or 2, **characterized in that**
an aligned portion to be housed in the slot (21) is formed on the other side of the annular coil bundle (P, Q),
a sectional area of a section of the aligned portion perpendicular to an insertion direction of the annular coil bundle (P, Q) is substantially the same as a sectional area of a section of the slot (21) perpendicular to the axial direction of the stator (100), and
a length of the aligned portion orthogonal to the insertion direction and a bundle direction of the annular coil bundle (P, Q) is larger than an opening width of the slot opening (22).

4. The stator manufacturing method according to any one of claims 1 to 3, **characterized in that** in the insertion step, the annular coil bundle (P, Q) is inserted with the bent side of the annular coil bundle (P, Q) facing inward in a radial direction of the stator (100).

5. The stator manufacturing method according to any one of claims 1 to 4, **characterized in that** the annular coil bundle (P, Q) includes a plurality of coil groups having different lengths in the insertion direction of the annular coil bundle (P, Q).

6. The stator manufacturing method according to any one of claims 1 to 5 further comprising
a restoration step of restoring the one side of the annular coil bundle (P, Q) bent in the bending step to its original shape.

7. The stator manufacturing method according to any one of claims 1 to 6 further comprising
a winding step of winding the coil (10) around a winding mold (110, 210) to manufacture the annular coil bundle (P, Q).

8. The stator manufacturing method according to claim 7, **characterized in that** a length of one of winding directions of the winding mold (110, 210) is substantially the same as a circumferential length of the stator (100) between two slots (21) into which the annular coil bundle (P, Q) is inserted.

9. The stator manufacturing method according to claim 7 or 8, **characterized in that** the winding mold (110, 210) contracts in a predetermined direction.

10. The stator manufacturing method according to any one of claims 1 to 9, **characterized in that**
a distributed winding is applied to the coil (10), and
the stator core (20) is an integral type.
